# EUROPEAN PATENT SPECIFICATION

(11) **EP 0 651 330 B1**
(45) Date of publication and mention of the grant of the patent: **03.05.2000**
(21) Application number: 94306261.2
(22) Date of filing: 24.08.1994
(51) Int. Cl.: G06F 9/46

(54) **Dynamic data exchange over a computer network**
Dynamischer Datenaustausch über ein Computernetzwerk
Echange de données dynamiquement via un réseau d'ordinateurs

(30) Priority: 02.11.1993 GB 9322587
(43) Date of publication of application: 03.05.1995
(73) Proprietor: International Business Machines Corporation, Armonk, N.Y. 10504 (US)
(72) Inventor: Maltby, John, Emsworth, Hampshire PO16 7PA (GB); Phipps, Simon, Southhampton, Hampshire SO2 1PQ (GB); Sethi, Vincent, Southampton, Hampshire SO1 1RU (GB); Singleton, Vince, Daventry, Northants, NN11 6SQ (GB)
(74) Representative: Davies, Simon Robert

(56) References cited:
- I & CS - INDUSTRIAL AND PROCESS CONTROL MAGAZINE, vol.64, no.4, April 1991, RADNOR, PENNSYLVANIA US pages 77 - 79 DENNIS R. MORIN: 'Windows 3.0 and DDE help PCs move data around the plant floor'
- COMPUTER DESIGN, vol.31, no.12, December 1992, LITTLETON, MASSACHUSETTS US pages 85 - 89 TOM WILLAMS: 'GUIs move OS toward object orientation'
- DR DOBB'S JOURNAL, vol.18, no.1, January 1993, USA pages 58, 60-61, 64, 94, 96-98 KAMAL SHAH: 'Windows DDE for Real-time Applications'
- IBM: 'OS/2 Technical library: OS/2 2.0 Presentation Manager Programming Guide' March 1992 , QUE , USA * page 32-1 - page 32-22 *
- MICROSOFT SYSTEMS JOURNAL, vol.2, no.6, November 1987, USA pages 13 - 38 KEVIN P. WELCH: 'Interprogram Communications Using Windows' Dynamic Data Exchange'

## Description

The present invention relates to a method of providing dynamic data exchange (DDE) over a computer network, in which updates made by a first application at a first computer in the network are copied to a second application at a second computer in the network.

A personal computer running a multi-tasking operating system such as OS/2 or Windows¹ can support more than one application running simultaneously. It is sometimes necessary for a user to be able to copy data from one application to another, for example to copy numbers from a spreadsheet into a report being prepared on a wordprocessor. One way of performing this transfer is to write the data from the first application into a file on the hard disk, and then retrieve the file into the second application. This is simple but relatively cumbersome.
¹OS/2 is a trademark of International Business Machines Corporation and Windows is a trademark of Microsoft Corporation

The OS/2 and Windows operating systems provide a more sophisticated facility, known as the clipboard, for performing such an operation. Applications copy data onto the clipboard (effectively a piece of memory which they then surrender to the operating system). Another application can then interrogate the operating system to find out what is available on the clipboard, and if desired take a copy of the data from the clipboard. Normally an application will write the data into the clipboard in several different formats, and the receiving application will then specify in which of these data formats it would like to receive the data. There are several standard formats, which are available for all applications to use. The clipboard can be used for exchanging text, images, and so on.

One slight complication is that the clipboard supports delayed rendering. In this case, the data itself is not supplied to the clipboard for a particular format, rather only a reference to the data. The data itself is supplied by the originating application only when that particular format is requested by another application. It is possible to use delayed rendering for some, all or none of the formats for any particular piece of data posted to the clipboard.

A typical situation in which a user might employ the clipboard function would be to copy a portion of text from one document to another. The user (generally with a mouse and cursor) would first identify the text to be copied, and then select the appropriate menu option to place this text in the clipboard. The application would then pass the text to the operating system in a variety of formats - for example, as a text file, as a bit map, as a metafile, as a miniature document complete with format information, and so on (the operating system specifies a list of common predetermined formats, but it is also possible for the application to use its own particular or private format). The user in another application can then request that the text/data is retrieved from the clipboard. Such a request results in the application being asked to select one of the available formats. The application may decide automatically which format to take (perhaps it can only accept a particular format), or it may pass this choice on to the user.

An application can request (via an operating system call) to become the owner or viewer of the clipboard. Becoming the owner is necessary for delayed rendering for the application to receive notification whenever text/data is requested from the clipboard. Becoming a viewer of the clipboard results in the application receiving notification whenever another application writes something to the clipboard.

The clipboard is well-suited to one-off transfers. However, if a particular piece of data in the first application is updated regularly, and each of these updates is to be copied across to the second application, then repeated use of the clipboard becomes tedious and awkward. This problem is addressed by the provision in OS/2 and Windows of an additional function, termed dynamic data exchange (DDE). In DDE a link is set up to copy data from a first application (the server) to a second application (the client). As the name implies the link is dynamic, in that for as long the link is maintained, modifications to the selected entry in the server application are automatically copied to the client application. In other words, the client contains a shadow or mirror of the data in the server.

An application in OS/2 or Windows can initiate DDE by one of two methods. In the first (which in practice is hardly ever used) an application broadcasts an INITIATE message to other applications executing on the node. The message contains the following information: Application Name, Topic, Item, in an ASCII text string, using zeroes as delimiters. The first of these is used to identify the originating application, the topic is then used to specify some particular data file or whatever, whilst the item indicates a position within the data file. For example, a spreadsheet program would give the spreadsheet name as the topic and perhaps use "R1C1" as the item to identify the data cell in the first row and in the first column. Applications receiving the message that wish to participate in DDE with the originating node respond positively, and a DDE conversation can then be set up.

The second method, which has become the de facto standard, is to initiate DDE via the clipboard. When a piece of data is copied to the clipboard, one of the formats used is a private format representative of DDE. The data stored with this private format is in fact the Application, Topic, and Item parameters described above. When the user retrieves this data into the second (client) application, this private format is indicated as providing DDE. When this option is selected, the client application responds requesting the start of DDE. This response is actually performed by broadcasting a message including the application and topic which is recognised by the originating server, leading to the commencement of the DDE conversation. Note that the conversation actually occurs between two windows, one belonging to the server and one belonging to the client. These are accessed by identifiers known as window handles.

The user can therefore initiate a DDE connection between the server application and the client. At the start of this DDE conversation, the server and client negotiate regarding the data format to use for data transfer between them. Obviously for DDE to work the client and server must be compatible, to the extent that the client recognises the private format placed on the clipboard by the server as an invitation to DDE and they support at least one data format in common.

There are three common modes of DDE link, known as cold, warm and hot. In a cold link, updates made to the server are only passed to the client upon the specific request of the client. In a warm link, the server notifies the client each time an update is made - the client can then request a copy of the relevant update. Finally, in a hot link, the server copies the update to the client each time a new update is made. Some applications allow the user to select the type of DDE link provided, others make the choice automatically. The actual control and data messages exchanged during a conventional DDE conversation are well-known to those skilled in the art.

A brief description of DDE and the clipboard in the OS/2 environment from the perspective of a user is presented in "Now That I Have OS/2 v2.0 On My Computer - What Do I Do Next ?" by S Levenson and E Hertz, Van Nostrand Reinhold, New York, 1992. A more detailed description can be found in "OS/2 2.0 Technical Library: Programming Guide, Volume II, version 2", available from International Business Machines Corporation, document reference number S10G-6494-00 (see Chapters 31 and 32 especially for information about the clipboard and DDE respectively).

Although DDE is now a widely available facility on single machines, there is an increasing tendency for personal computers to be linked together by networks such as local area networks (LANs). One possible approach is described in Microsoft Windows for Workgroups Resource Kit (Document number 0030-37275), see especially chapter 11. However, the solution here is predicated on all the network users running the same operating system, which is specially designed to work across networks. It is desirable for users of separate machines, even machines running different operating systems designed primarily for standalone machines, to be able to interact over the network as much as possible, performing the same tasks as if essentially they were using a single machine.

Computer Design v31/12, Dec 1992, p85-89, "GUIs moves OSs toward object orientation" describes the use of DDE as a means of transferring data from a real-time node into a Windows-based user interface application. It further describes a product NetDDE from Wonderware that permits peer-to-peer communications for such a purpose over a network, between nodes having potentially different operating systems. As a result, it is transparent to the UI application whether the device that it is controlling is local or remote.

Accordingly, the invention provides a method of providing dynamic data exchange (DDE) over a computer network, in which updates made by a first application at a first computer in the network are copied to a second application at a second computer in the network, said first and second computers each running a conferencing application, the method comprising the steps of:
performing DDE between the first application and the conferencing application running on the first computer;
transmitting updates received by the conferencing application on the first computer from the first application to the conferencing application on the second computer; and
performing DDE between the conferencing application running on the second computer and the second application, whereby the updates received by the conferencing application on the second computer are supplied to the second application.

Effectively what is occurring is that two separate DDE conversations are in progress, one on each machine, and these are linked by the two conferencing applications, which transmit updates from the first application on the first machine to the second machine, allowing them to be notified or copied to the second application thereon. An important feature of the invention is that since each of the applications is involved in what to it appears to be a normal DDE conversation on a single machine, there is no need to modify existing applications in order for them to exploit DDE over the network.

In a preferred embodiment, the DDE over the computer network is initiated by the following steps:
submitting material from the first application to the clipboard on the first computer;
receiving notification at the conferencing application on the first computer that the first application has submitted material to the clipboard, and obtaining a list of available formats for said submitted material;
transmitting the list of available formats to the second computer; submitting the list of available formats to the clipboard on the second computer;
responsive to a request from the second application, commencing DDE between the conferencing application on the second computer and the second application, and transmitting said request from the conferencing application on the second computer to the conferencing application on the first computer;
and responsive to the receipt of said request at the first computer, commencing DDE between the conferencing application on the first computer and the first application.

This method of initiating a DDE conversation corresponds to the second approach described above (ie the one that is almost universally used in practice). In theory for the first approach the conferencing applications could be used to broadcast the initiate messages around the network, but there is little practical demand for such an approach, and the communications overheads on the network would be much greater.

It is preferred that the conferencing application at the second computer changes the data associated with the format corresponding to DDE by replacing the application name therein with a name including an identifier of the first computer. This avoids possible problems if an application having the same name as the first application is running on the second computer. Note that it is also possible to make this name change at the first computer.

It is convenient for the list of available formats to be submitted to the clipboard on the second computer using delayed rendering, since this avoids superfluous network traffic in relation to clipboard formats that are never actually requested. In fact, the data associated with the DDE format is simply the string containing the application name, topic and item, and so the delayed rendering for the DDE format does not save much bandwidth per se. However this does allow the same approach to be used for DDE as for all the other clipboard formats, including those such as bit map which do require significant bandwidth. Moreover, the command from the operating system to provide information to the clipboard under delayed rendering can be used to trigger certain processing, that would otherwise have to be performed earlier, whether or not DDE was ever requested.

Preferably the method further comprises the step of generating unique identifiers for the DDE conversation at each of said first and second computers, and using the pair of unique identifiers to identify the DDE conversation. These may be sequentially generated for each DDE conversation at a given machine, and provide a simple way of identifying that conversation. This approach is particularly valuable if there are multiple DDE conversations simultaneously on the network between similarly named applications. It is convenient when using the identifiers for these to be associated with the window handles maintained by each of the conferencing applications on the first and second computers. This allows the rapid identification and processing of messages coming into the relevant window handle.

The DDE over a computer network can be utilised even where the first and second computers run different operating systems. In such circumstances it is preferred that all messages are sent between computers in a format compatible with a first operating system. This implies that the computer running the second operating system must convert messages for transmission to the computer running the first operating system into said format, and convert messages received from the computer running the first operating system out of said format.

The invention also provides a computer workstation supporting dynamic data exchange (DDE) over a computer network, in which updates made by a first application at the computer workstation are copied over the network to a second application at a remote computer workstation, the computer workstation comprising:
means for performing DDE between the first application and a first conferencing application on the computer workstation;
means for transmitting updates received by the first conferencing application to a second conferencing application on the remote computer;
means for receiving messages from the second conferencing application on the remote computer; and
means, responsive to said received messages, for sending DDE messages from the first conferencing application to said first application.

A detailed description of an embodiment of the invention will now be provided by way of example, with reference to the following drawings:
Figure 1 is a schematic block diagram of a typical computer workstation;
Figure 2 is a simplified diagram of the major software components running on the workstation of Figure 1;
Figure 3 is a flow chart illustrating the process for copying a clipboard entry at a first machine to the clipboard at a second machine;
Figure 4 is a flow chart illustrating the processing of a request at the second machine for a clipboard entry from the first machine;
Figure 5 is a flow chart illustrating the initiation of a DDE conversation at the client;
Figure 6 is a flow chart illustrating the initiation of a DDE conversation at the server; and
Figure 7 is a flow chart illustrating the processing of DDE messages passing between the client and the server.

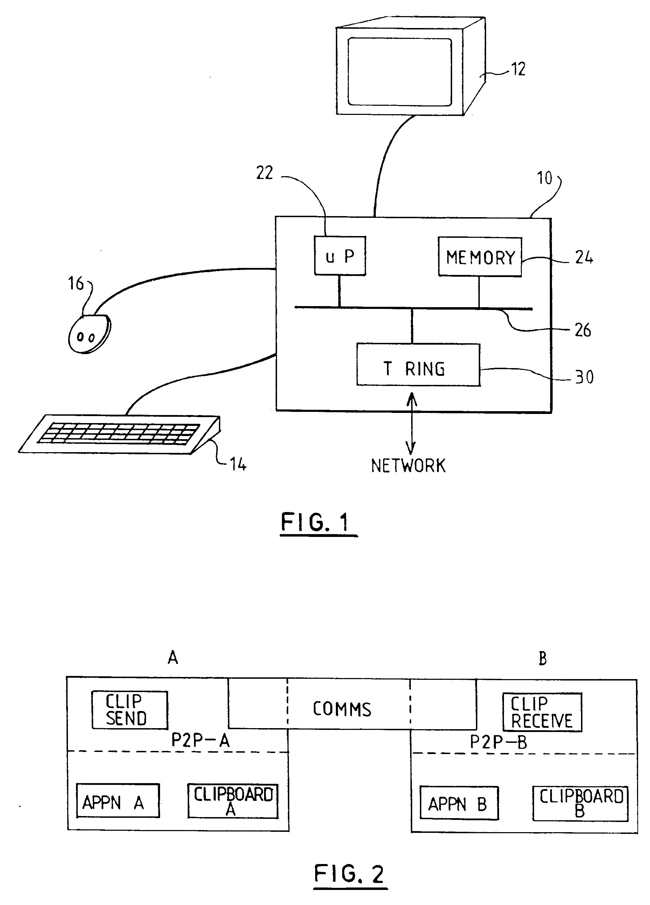

Figure 1 is a simplified schematic diagram of a computer system, with a system unit 10, a display screen 12, a keyboard 14 and a mouse 16. The system unit 10 includes microprocessor 22, semi-conductor memory (ROM/RAM) 24, and a bus over which data is transferred 26. The computer of Figure 1 may be any conventional workstation, such as an IBM PS/2 computer. The computer of Figure 1 is equipped with a network adapter card 30. This card, together with accompanying software, allows messages to be transmitted onto and received by the computer workstation. Various forms of network adapter card are available for use with networks such as Token Ring, Ethernet, ISDN, and so on. The operation of the network adapter card is well-known and so will not be described in detail.

Figure 2 illustrates the main software components on two terminals A, B, necessary for an understanding of the invention. Both terminals A and B are typically workstations as shown in Figure 1, and have clipboards ("CLIPBOARD A" and "CLIPBOARD B" respectively) supported by the operating system at the respective terminals. The two terminals are connected by a network link with appropriate communications software ("COMMS") at each terminal to provide data communications between terminal A and terminal B. Such communications software interfaces with the network adapter card and is again well-known in the art.

Terminals A and B also run conferencing software, which is responsible for implementing the DDE between the two terminals. This conferencing software is designated as P2P-A and P2P-B on terminals A and B respectively. P2P-A and P2P-B are simply additional applications as far as the operating system is concerned, although for present purposes they are perhaps most simply regarded as enhancements to the COMMS software. P2P-A and P2P-B interact with the COMMS software to exchange messages between terminals A and B using conventional communication protocols. The operation of P2P-A and P2P-B is described in more detail below.

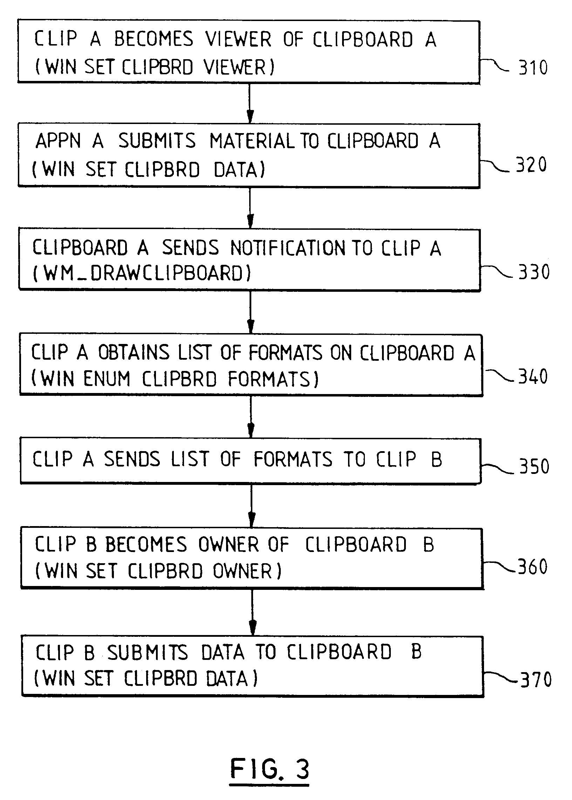

The provision of DDE between terminals A and B relies on the ability to transmit clipboard information from one machine to another. A technique for performing such a function is described in European Application 93306880.1, a copy of which is filed herewith. The aspects of this procedure necessary for an understanding of the present invention are repeated here, and are also illustrated by the flowchart of Figure 3.

An application program ("APPN A") and a routine ("CLIP SEND"), part of P2P-A, run on terminal A, with an application program ("APPN B") running on terminal B. CLIP SEND uses the COMMS system to send a message to terminal B to activate another routine ("CLIP RECEIVE"), part of P2P-B, at terminal B. CLIP SEND makes an operating system call to become a viewer of CLIPBOARD A in accordance with conventional clipboard manipulation. The user at terminal A selects the appropriate material from APPN A and copies this into CLIPBOARD A in the conventional manner. Because the CLIP SEND routine is a viewer of CLIPBOARD A, it is notified of any updates to CLIPBOARD A. When it is alerted to a change to CLIPBOARD A, it requests the list of available formats which it sends to CLIP RECEIVE. CLIP RECEIVE now takes ownership of CLIPBOARD B and inserts the list of formats using delayed rendering (ie it passes a null pointer to the operating system). This avoids the bandwidth overheads associated with sending the actual data itself. The contents of CLIPBOARD A are thus reproduced on CLIPBOARD B.

In the OS/2 operating environment the specific calls are as given below, and are listed in Figure 3, although it should be noted that the invention is not limited to the OS/2 operating system. CLIP SEND becomes a viewer of CLIPBOARD A using WinSetClipbrdViewer (step 310), and APPN A inserts data onto CLIPBOARD A using WinSetClipbrdData (step 320). This causes a notification WM_DRAWCLIPBOARD to be sent to CLIP SEND (step 330). CLIP SEND interrogates CLIPBOARD A using WinEnumClipbrdFmts (step 340) to obtain the list of formats in which the data on the clipboard is available. It passes this list to the remote terminal B using standard messaging software (step 350). CLIP RECEIVE then uses the call WinsetClipbrdOwner to become the owner of CLIPBOARD B (step 360). The formats are then inserted onto CLIPBOARD B (step 370) using the delayed rendering option in WinSetClipbrdData, and become available for user selection.

The various clipboard formats are now available from within APPN B. One of these formats is recognised by APPN B as corresponding to DDE, and this option is then offered to the user. For the purpose of the present invention we can assume that the user at terminal B selects this entry corresponding to DDE (the selection of any other format is discussed in the above-mentioned patent application concerning a network clipboard).

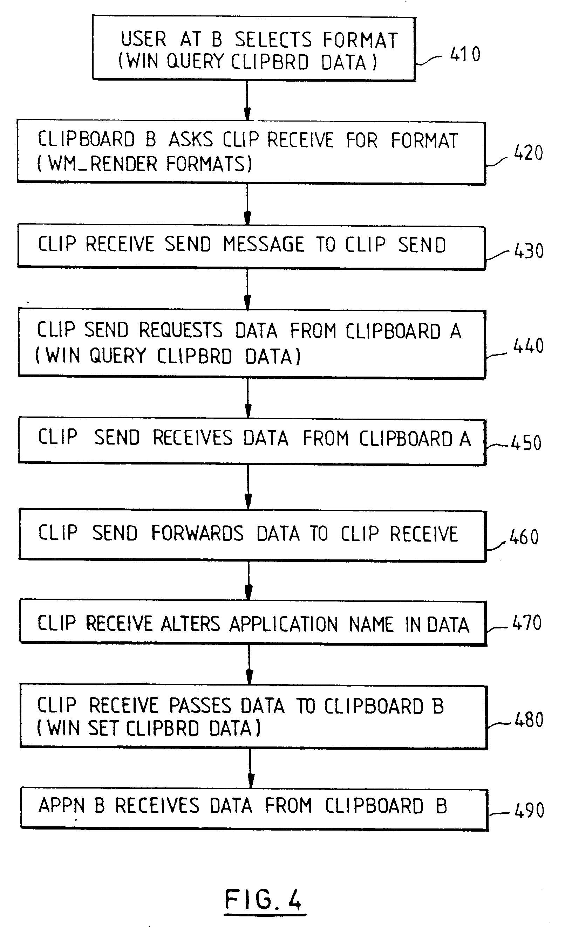

The processing involved with satisfying the DDE request is illustrated in Figure 4. The user initially selects the clipboard entry corresponding to DDE, resulting in a WinQueryClipbrdData call (in OS/2) from APPN B to CLIPBOARD B (step 410). Since all the formats are inserted onto CLIPBOARD B using delayed rendering (to save the bandwidth of transmitting formats which are never required) the operating system passes the clipboard request back to CLIP RECEIVE, the origin of the clipboard entry, using WM_RENDERFMT (step 420). This request is converted into a message sent from CLIP RECEIVE to CLIP SEND (step 430). CLIP SEND now interrogates the corresponding entry on CLIPBOARD A, using WinQueryClipbrdData (step 440) which will produce the data string corresponding to "Application.Topic.Item.." (this may be directly available from the clipboard, or provided by APPN A using delayed rendering: step 450). CLIP SEND then sends a message containing this data string across to CLIP RECEIVE (step 460).

It is now necessary for P2P-B to be able to identify that the relevant private format represents an offer of DDE. Various commercially available applications have been examined and found to use format descriptors such as "Link"_{,} "OwnerLink", and "ObjectLink" to indicate DDE. It may also be possible to recognise a DDE format from the associated data string. Once the DDE format has been recognised, then P2P-B modifies the associated data string (step 470), so that the application name is changed from APPN A to P2P-A or similar. The new application name is prefaced by "P2P", to prevent other applications at node B from being confused over the source of the entry, to which is appended "A", representing the identity of the originating node. It is not absolutely necessary to perform this name change, but problems can arise otherwise if an application having the same name as APPN A happens to be running on terminal B as well. As explained below, this can lead to DDE initiation with the wrong application. Note that if it is desired to support parallel DDE conversations between nodes A and B, then it may be necessary to further append to the new application name some identifier of the server application on node A. The topic and item parameters are unchanged. It is this modified information that is then returned to CLIPBOARD B using WinSetClipbrdData (step 480) for supply to APPN B (step 490).

Once it has received the DDE data string via delayed rendering from P2P-B, APPN B tries to commence DDE in the normal manner by sending out an INITIATE message, and in accordance with normal DDE operation then sits and waits for an acknowledgement. This data string is recognised by P2P-B, which from then on acts as the server in a DDE conversation between P2P-B and APPN B. Note that due to the name change of the application, only P2P-B will recognise this application: had there been no change then it is possible that a third application running at B, having the same name as APPN A, would have responded positively, erroneously leading to DDE between APPN B and this third application. Although this DDE conversation appears to be completely conventional as far as APPN B is concerned, in fact as explained below P2P-B is only acting as a relay station. The INITIATE message is forwarded from P2P-B to P2P-A, but with the Application Name of P2P-A now replaced by the true target application, ie APPN A. P2P-A then sends its owns INITIATE message, which is recognised by APPN A, leading to the setting up of a DDE conversation for the specified topic between APPN A and P2P-A. The acknowledgement from APPN A to P2P-A is relayed to P2P-B, which after appropriate changes forwards the acknowledgement to APPN B, confirming the DDE conversation on terminal B between APPN B and P2P-B. Note that since APPN B must wait for this acknowledgement to arrive, P2P-B includes a timer so that if nothing is received from machine A within a predetermined time (10 seconds say), P2P-B can return a message to APPN B aborting the DDE.

The overall result of this exchange of messages is that two DDE conversations are set up, one on machine A between APPN A as the server and P2P-A as the client, and one on machine B between P2P-B as the server and APPN B as the client. These two conversations are linked, in that when P2P-A receives updates as the client from APPN A, it notifies or copies them to P2P-B, which in turn then notifies or copies the updates on to APPN B. Thus P2P-B is effectively pretending to be APPN A as far as APPN B is concerned.

P2P-A and P2P-B act as intermediaries for the DDE conversation between APPN A on machine A and APPN B on machine B. An important feature is that as far as APPN A and APPN B are concerned they are simply engaging in conventional DDE conversations with P2P-A and P2P-B respectively. This means that there is no need to modify APPN A or APPN B in order for them to take advantage of the network DDE facility. This is a significant advantage, since it provides full compatibility with existing applications. The only slight discrepancy that a user may notice is if APPN B provides the user with the name of the server, since this will appear as P2P-B rather than APPN A. However, it is unlikely that this will cause the user any real confusion.

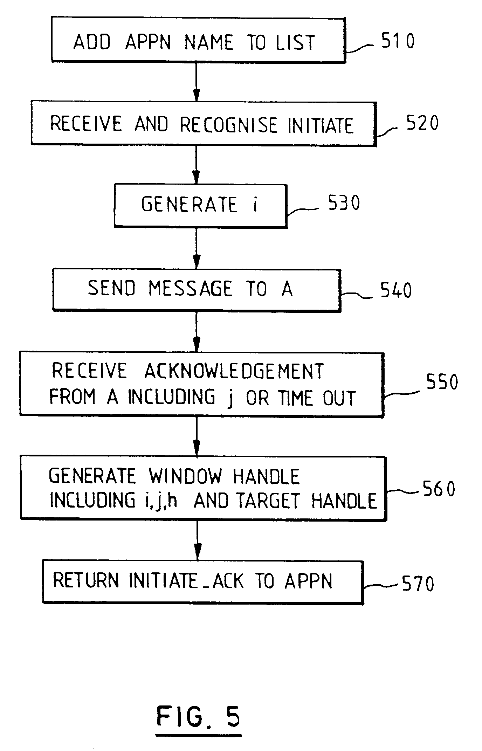

Figure 5 illustrates the actions at terminal B in setting up the DDE conversation. When P2P-B receives the application name, topic and item from APPN A via P2P-A, (ie at a time corresponding to step 470 in Figure 4) it creates an entry in a table containing the application name and topic as inserted onto CLIPBOARD B, the original application name (APPN A), and a communication identifier (say "h") that is used for routing messages between machines A and B (step 510). It then waits for an INITIATE message which matches up to an application name and topic in the list (step 520), before generating an identifier i (530). Each DDE conversation on node B involving P2P-B is allocated its own unique value of i. The INITIATE message is then forwarded to P2P-A, with the original application name restored (step 540), and P2P-A responds with an acknowledgement, including an identifier j generated by terminal A (step 550: alternatively the procedure may time out). The unique pair (i, j) are used in all future DDE messages for identifying this DDE conversation. Note that the INITIATE_ACK can be associated with the INITIATE despite terminal B having no prior knowledge of j, since P2P-B effectively delays any further action until such acknowledgement is received. P2P-B then obtains a window handle for the DDE conversation with APPN B (step 560), to which is added as information the identifier i and j, the communications identifier h, and the window handle of the APPN B (as supplied in the original INITIATE message). P2P_B now returns an INITIATE_ACK back to APPN B, permitting the commencement of DDE (step 570).

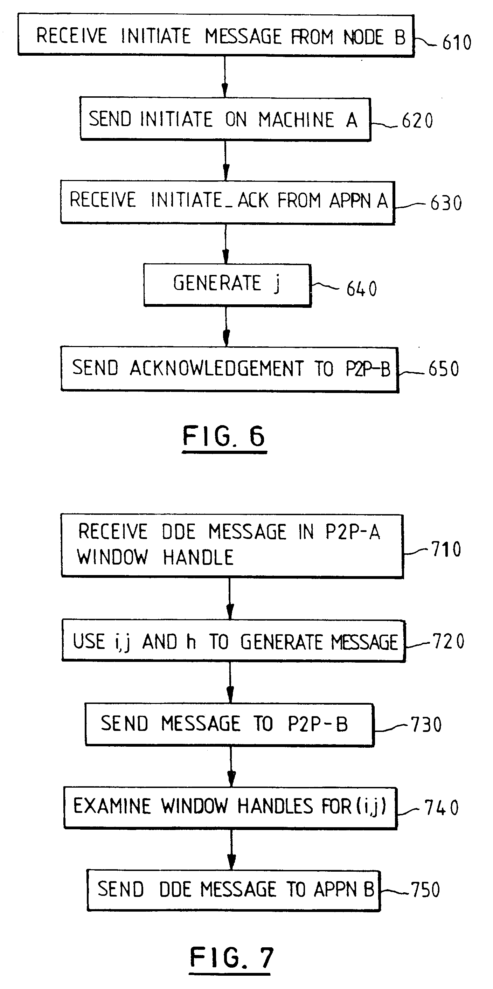

Figure 6 illustrates the operations at terminal A that are complementary to those shown in Figure 5 for terminal B (effectively they occur between steps 540 and 550 of Figure 5). P2P-A receives the initiate message from node B (step 610), and using the application name contained therein sends out an INITIATE message (step 620). Note that prior to sending the INITIATE message, it must obtain a window handle for use in the DDE conversation. As shown in step 630, P2P-A receives the INITIATE_ACK message back from APPN A, and then generates its own unique identifier (step 640). The values of i, j, h (the communications identifier) and the window handle supplied by APPN A are then added to the window that P2P-A has for this DDE conversation. P2P-A can then respond to P2P-B, this acknowledgement including the value of j (step 650).

The handling of the INITIATE messages is different from all other DDE messages, in that they are effectively broadcast to all applications. By contrast later DDE messages are directed to the specific window handles, and are processed as shown in Figure 7. A DDE message is received from APPN A in the window handle of P2P-A (step 710). A transmission is then generated from this message using the values of conversation identifiers i and j, and communication identifier h (step 720), and this is sent to P2P-B (step 730). This arrives as a normal incoming communications message at terminal B. The values of i and j are retrieved from the message, and then each P2P-B DDE window handle is examined in turn to match up the values of i and j (step 740). When a match is found the correct DDE conversation has been identified. The DDE message can now be forwarded to the client application APPN B (step 750) using the window handle stored with i and j. It should be appreciated that the processing of messages in the converse direction, ie from client to server instead of server to client, is exactly analogous.

The procedure so far described is suitable for DDE between two machines running the same operating system (eg both OS/2 or both Windows). However, complications arise if it is desired to provide cross-platform support, such as when the first machine runs Windows and the second machine runs OS/2.

One problem to overcome is that formats are placed on the clipboard using numbers (referred to as atoms). An atom is a generally a number which is effectively a shorthand used by the operating system to denote a particular string. Certain standard formats have pre-allocated atoms, for example in OS/2 the format CF_TEXT has the atom 1, and CF_BITMAP has the atom 2 (CF_TEXT and CF_BITMAP are particular formats for text and images respectively). Private formats must obtain their own atom number: this is done by registering an appropriate string with the operating system, and being allocated an atom back to denote that string. Note that the atom allocated to any particular private string depends on the current machine state, and will vary across the network. For an atom allocated to a private format, it is possible to query the operating system for the string associated with a particular atom, and vice versa.

When copying the clipboard from terminal A to terminal B therefore, it is not possible to send the atom numbers directly, since except for the preallocated formats, they are machine dependent. This can be overcome relatively easily however by sending the unique string associated with any particular format, rather than the atom number itself. The receiving terminal can then obtain the correct atom for that string from the operating system for that terminal (registering it if necessary). Note that in OS/2 the string "#1" is associated with the format having the preallocated atom 1 (note that CF_TEXT is the name of the format, rather than being the string associated with the format), "#2" is associated with the format having the preallocated atom 2, and so on. Thus in OS/2 the following procedure can be used for both preallocated and private formats: the atom corresponding to a clipboard format is queried to obtain the corresponding string, which is then transmitted over the network. At the receiving terminal, this string can then be registered to obtain the appropriate atom on that machine. The string sent for the format CF_TEXT for is "#1", for CF_BITMAP it is "#2", and so on. For these preallocated formats of course an alternative possibility would be to send the atom numbers directly, since these would be the same on all OS/2 machines in the network.

The Windows operating system is slightly different from OS/2. Although it too has preallocated atoms numbers for certain formats, the numbering does not always correspond to OS/2. For example both support CF_TEXT which is allocated the atom number 1, but by contrast, the format CF_DSPTEXT has the preallocated atom number 3 in OS/2 and the preallocated atom number 129 in Windows. Another difference is that in Windows an attempt to query one of the preallocated atoms results in an error, as does an attempt to register a string for these preallocated formats (ie "#1", "#2" etc). Finally, the data formats themselves do not always correspond. Thus whilst CF_TEXT is the same on both systems, CF_METAFILE represents different formats in the two operating systems. Thus not only are the format names/numbers sometimes different, but sometimes the formats themselves are incompatible.

Table 1 summarises the use of atoms in both the OS/2 and Windows operating systems. Column 1 of Table 1 (headed "format name") represents the names of preallocated formats in one or other (or both) of these two operating systems. For both OS/2 and Windows there is then listed the preallocated atom which is assigned to that format. A "n/a" in this column, such for Windows with respect to CF_DSPMETAFILE, indicates that this format is not specifically supported by the operating system (although it may of course be used as a private format). For each atom there is then given its associated string: given this string it is possible to query the operating system and obtain the corresponding atom. Note that for Windows none of the preallocated formats have associated strings.

The final column represents the string used by the P2P conferencing applications to designate that format in internal communications. Essentially the formats are transmitted in terms of the associated OS/2 string. On an OS/2 machine therefore, the sending application (ie P2P-A) simply queries the string associated with the atom number on the clipboard, and transmits that string. On a Windows sending machine however, the application P2P-A must first scan the values in Table 1 to determine the format name. If no match is found, then the number corresponds to a private format, the name of which can be obtained from the operating system, and then transmitted, ie analogous to the procedure with OS/2. However, if a match is found (ie the atom is a preallocated Windows format), then the string to send denoting that format is obtained from the final column of Table 1. Furthermore, in the case of formats which differ slightly between OS/2 and Windows, such as CF_BITMAP, it is necessary for the Windows conferencing application to convert the data into the correct OS/2 format before transmission.

On an OS/2 receiving machine, when receiving strings from another OS/2 machine, the procedure is straightforward, in that the incoming strings can be queried against the operating system (and registered if necessary) to obtain an atom number. Exactly the same procedure is followed if the strings are being received from a Windows machine, in accordance with the final column in Table 1. Where the Windows string and format matches that of OS/2, this results in the clipboard entry being processed in the same way irrespective of the origin. For other formats there is no equivalent in OS/2 and in these cases they are entered onto the clipboard as private formats. This category includes formats such as CF_METAFILE, which although having the same name in both types of operating system, differs so much from one platform to another that in practice it must be treated as two different formats. The format names for the P2P strings, when they do not correspond to the OS/2 strings, are chosen to be non-standard, so no OS/2 application will accidently recognise and try to access them. Indeed it is unlikely that in general any OS/2 application will be able to understand and access the Windows-specific formats. However, maintaining them on the clipboard ensures that if CLIPBOARD B is copied to a yet another machine, this time a Windows machine, then the formats will be meaningful there, and allow clipboard operation between machine A and this new computer.

The procedure is analogous if the strings are received at a terminal supporting the Windows operating system. If the incoming strings originate from another Windows terminal, the processing is again straightforward. A look-up table containing the relevant columns from Table 1 is searched, and if the string is found the corresponding preallocated number can be determined. Alternatively, if the string is not found, the operating system can be queried to obtain the atom for that private format. Essentially the same procedure is followed if the string originated from a terminal running the OS/2 operating system. However, if the string corresponds to a preallocated OS/2 format not supported in Windows (eg "#6"), then "-OS/2.Format" is appended to the string before obtaining an atom. This avoids causing the error mentioned above of trying to register a string corresponding to a preallocated format. However, if such a clipboard entry is further copied to another OS/2 machine, then the "-OS/2 Format" can be stripped out, leaving the original clipboard format entry to be validly interpreted at the new OS/2 machine.

Note that P2P when receiving data on a Windows machine must perform any necessary data conversions, in the cases mentioned above where a data format differs slightly between OS/2 and Windows. In other words, the OS/2 version of the data format is used for internal communications in P2P, and any necessary conversion is performed prior to sending from a Windows machine, and on receipt by a Windows machine.

The above procedures allow the clipboard to be copied interchangeably between OS/2 machines and Windows machines. As regards the present invention, this allows the DDE invitation to be posted on a remote machine, whether or not that machine runs the same operating system as the originating machine. However, another problem arises in that the provision of DDE itself is not the same in OS/2 as in Windows. Specific differences are:
(a) messages are numbered differently in OS/2 and Windows
(b) in OS/2 the messages are all independent of one another, whereas in Windows they are not (for example an ACK message received in response to a REQUEST message must be handled differently from an ACK received in response to a DATA message)
(c) In OS/2 there are two message structures, DDEINIT for initiate messages, and DDESTRUCT for all the other messages, whilst in Windows four different structures are used
(d) In OS/2 the handling of each message is always the same, whereas in Windows the handling depends on the control information in the message
(e) In OS/2 the control structure followed by any data in a message is contained in one contiguous block of memory which is handed over to the oeprating system when the message is sent, and no further handling of the memory block is needed, whereas in Windows the control structure and any data for the message are handled differently for each message - some have a message parameter which points to memory containing the structure, some have a parameter pointing to memory containing the data, in some the parameter points to memory containing a handle which itself points to memory containing the data, in others the message parameter is itself the control structure; for some the memory containing the data must be freed by the process which sent the message, in others the memory is freed by the program receving the message; the latter two cases are determined by a flag in the control structure.

As a result of these differences care must be taken in mapping the DDE messages from one operating system to another. The conferencing applications are implemented so as to exchange messages in OS/2 format. Any terminals running Windows must therefore perform additional processing on incoming/outgoing messages - ie corresponding to step 720 in Figure 7 for Windows transmission and step 740 in Figure 7 for Windows receipt.

The basic mapping of messages between OS/2 and Windows is presented in Table 2. Each Windows system maintains a look-up table containing the equivalent of Table 2, to allow it to perform the necessary conversions. In the majority of cases, given the input and output message structures, it is straightforward to map the relevant data items from the input message to the output message, so that this procedure will not be discussed in detail. Essentially, Windows control information and data are mapped into the OS/2 DDESTRUCT format for transmission, and out of it on receipt. The conversion necessary in terms of the different data formats, eg the slightly different bit map structures, between OS/2 and Windows is likewise relatively straightforward. The same conversion is of course also used in transporting clipboard data from one machine to another.

The more awkward situations are processed by the Windows conferencing application remembering the previous message sent in both directions for each DDE conversation being handled. Thus the following items are associated with the window handle used for the relevant DDE conversation: (a) last message received from application on this machine; (b) the handle for any data to go with it; (c) the last message received from the other machine; (d) the handle for any data to go with it. When an ACK is received as part of the initiate sequence on a Windows machine, it is converted into an INITIATE_ACK for transmission over the link; conversely, if an INITIATE_ACK is received over the network, it is converted back to an ACK message before forwarding to the application on a Windows machine.

Table 3 illustrates the different handling performed on an ACK message according to the type of message that it was generated in response to, and also the memory allocating and freeing strategies. Each entry in the Table 3 is in the form of a pair, with the first part representing a message sent from a client to the server, and the second part representing the response to that message sent from the server back to the client (or vice versa). Note that the DATA and POKE messages in Windows have a flag fRelease which, if set, means that the program receiving the message will free the memory associated with the mesage, otherwise the program sending the message will free it when it receives acknowledgement. This is emulated at a Windows conferencing application acting acting as a receiving terminal by setting a corresponding flag when it issues the message to the target application and allocating and freeing its own memory accordingly. Thus both the server and the client behave just as if they were operating on a single machine, maintaining the transparency of the network DDE.

Although the invention has been described with one machine acting as the server and one as the client, it will be appreciated that typically a computer will be capable of providing support for both operations, even simultaneously. Furthermore, there is no limitation to networks of two machines, but rather DDE conversations can be maintained between pairs of computers in a much larger conference: for example, the conferencing software Person to Person/2 available from IBM allows conferences of up to six people. Note also that although the invention has been primarily discussed with reference to the OS/2 and Windows operating systems, its application is not limited thereto, but will find utility in any system which supports dynamic data exchange.

**Table 1**

| Format Name | OS/2 | | Windows | | P2P String |
|---|---|---|---|---|---|
| | Atom | String | Atom | String | |
| CF_TEXT | 1 | "#1" | 1 | n/a | "#1" |
| CF_BITMAP | 2 | "#2" | 2 | n/a | "#2" |
| CF_DSPTEXT | 3 | "#3" | 129 | n/a | "#3" |
| CF_DSPBITMAP | 4 | "#4" | 130 | n/a | "#4" |
| CF_METAFILE (for OS/2) | 5 | "#5" | - | - | "#5" |
| CF_METAFILE (for Windows) | - | - | 3 | n/a | "P2P/W-Metafile" |
| CF_DSPMETAFILE | 6 | "#6" | n/a | n/a | n/a |
| CF_PALETTE | 9 | "#9" | 9 | n/a | "CF_PALETTE" |
| CF_SYLK | n/a | n/a | 4 | n/a | "CF_SYLK" |
| CF_DIF | n/a | n/a | 5 | n/a | "CF_DIF" |
| CF_TIFF | n/a | n/a | 6 | n/a | "CF_TIFF" |
| CF_OEMTEXT | n/a | n/a | 7 | n/a | "CF_OEMTEXT" |
| CF_DIB | n/a | n/a | 8 | n/a | "CF_DIB" |
| CF_PENDATA | n/a | n/a | 10 | n/a | "CF_PENDATA" |
| CF_RIFF | n/a | n/a | 11 | n/a | "CF_RIFF" |
| CF_WAVE | n/a | n/a | 12 | n/a | "CF_WAVE" |
| n/a | system assigned | (defined string) | system assigned | (defined string) | |

**Table 2**

| Message | OS/2 Id | OS/2 Struct | Win Id | Win Struct |
|---|---|---|---|---|
| INITIATE | 00A0 | DdeInit | 03E0 | n/a |
| INITIATE_ACK | 00A9 | DdeInit | n/a | n/a |
| TERMINATE | 00A8 | n/a | 03E1 | n/a |
| ADVISE | 00A4 | DdeStruct | 03E2 | DdeAdvise |
| UNADVISE | 00A5 | DdeStruct | 03E3 | n/a |
| ACK | 00A2 | DdeStruct | 03E4 | DdeAck |
| DATA | 00A3 | DdeStruct | 03E5 | DdeData |
| REQUEST | 00A1 | DdeStruct | 03E6 | n/a |
| POKE | 00A6 | DdeStruct | 03E7 | DdePoke |
| EXECUTE | 00A7 | DdeStruct | 03E8 | n/a |

**Table 3**

| Client | Invention | Server |
|---|---|---|
| Initiate | Convert message and structs and pass on | |
| | Carried as Initiate_Ack | Ack |
| Terminate | Convert message and structs and pass on | |
| | Convert message and structs and pass on | Terminate |
| Request | Convert message and structs and pass on | |
| | Convert message and structs and pass on | Ack |
| Advise | Allocate memory to hold the DdeAdvise struct; convert message and structs and pass on | |
| | Free the memory allocated above; convert message and structs and pass on | Ack |
| Unadvise | Convert message and structs and pass on | |
| | Convert message and structs and pass on | Ack |
| Data and Poke | Allocate memory for: (i) the handle to the data (for formats other than Text, OemText and Private), (ii) the data itself, and (iii) the DdeData struct. | |
| | Deconstruct the data (bitmap or whatever) from the handle passed in into the data memory; generate a new handle and put it into the handle memory; convert message and structs and pass on | |
| | Free the memory allocated above; convert message and structs and pass on | Ack |
| Execute | Allocate the memory to hold the data (a text list of commands) | |
| | Free the memory allocated above; convert the message and structs and pass on | Ack |

## Claims

1. A method of providing dynamic data exchange (DDE) over a computer network, in which updates made by a first application (APPN A) at a first computer (A) in the network are copied to a second application (APPN B) at a second computer (B) in the network, said first and second computers each running a conferencing application (P2P-A, P2P-B), the method comprising the steps of:
performing DDE between the first application and the conferencing application running on the first computer;
transmitting updates received by the conferencing application on the first computer from the first application to the conferencing application on the second computer; and
performing DDE between the conferencing application running on the second computer and the second application, whereby the updates received by the conferencing application on the second computer are supplied to the second application.

2. The method of claim 1, further comprising initiating the DDE over the computer network by the following steps:
submitting (320) material from the first application to the clipboard on the first computer;
receiving (330) notification at the conferencing application on the first computer that the first application has submitted material to the clipboard, and obtaining a list of available formats for said submitted material;
transmitting (350) the list of available formats to the second computer;
submitting (360) the list of available formats to the clipboard on the second computer;
responsive to a request from the second application, commencing DDE between the conferencing application on the second computer and the second application, and transmitting said request from the conferencing application on the second computer to the conferencing application on the first computer;
and responsive to the receipt of said request at the first computer, commencing DDE between the conferencing application on the first computer and the first application.

3. The method of claim 2, further comprising the step 470 of the conferencing application at the second computer changing the data associated with the format corresponding DDE by replacing the application name therein with a name containing an identifier of the first computer.

4. The method of claim 2 or 3, wherein the list of available formats are submitted to the clipboard on the second computer using delayed rendering.

5. The method of any preceding claim, further comprising the step of generating (530 640) unique identifiers for the DDE conversation at each of said first and second computers, and using (720) the pair of unique identifiers to identify the DDE conversation.

6. The method of any claim 5, further comprising the steps (560) of the conferencing applications on the first and second computers each maintaining window handles, and associating with said window handles said pair of unique identifiers.

7. The method of any preceding claim, wherein said first and second computers run first and second operating systems.

8. The method of claim 7, where in all messages are sent between computers in a format compatible with said first operating system, and the method further comprises the steps at the computer running said second operating system of converting messages for transmission to the computer running the first operating system into said format, and converting messages received from the computer running the first operating system out of said format.

9. A computer workstation supporting dynamic data exchange (DDE) over a computer network, in which updates made by a first application (APPN A) at the computer workstation are copied over the network to a second application (APPN B) at a remote computer workstation, the computer workstation comprising:
means for performing DDE between the first application and a first conferencing application (P2P-A) on the computer workstation;
means for transmitting updates received by the first conferencing application to a second conferencing application (P2P-B) on the remote computer;
means for receiving messages from the second conferencing application on the remote computer; and
means, responsive to said received messages, for sending DDE messages from the first conferencing application to said first application.

## Patentansprüche

1. Verfahren zur Bereitstellung eines dynamischen Datenaustauschs (DDE) über ein Rechnernetzwerk, in dem Aktualisierungen, die von einer ersten Anwendung (APPN A) an einem ersten Rechner (A) in dem Netzwerk durchgeführt werden, in eine zweite Anwendung (APPN B) an einem zweiten Rechner (B) in dem Netzwerk kopiert werden, wobei der erste und der zweite Rechner jeweils eine Konferenzanwendung (P2P-A, P2P-B) ausführen, wobei das Verfahren die folgenden Schritte umfasst:
Durchführen eines DDE zwischen der ersten Anwendung und der Konferenzanwendung, die auf dem ersten Rechner ausgeführt wird;
Übertragen von Aktualisierungen, die von der Konferenzanwendung auf dem ersten Rechner von der ersten Anwendung empfangen werden, an die Konferenzanwendung auf dem zweiten Rechner; und
Durchfuhren eines DDE zwischen der Konferenzanwendung, die auf dem zweiten Rechner ausgeführt wird, und der zweiten Anwendung, wodurch die von der Konferenzanwendung auf dem zweiten Rechner empfangenen Aktualisierungen der zweiten Anwendung bereitgestellt werden.

2. Verfahren nach Anspruch 1, das des Weiteren die Einleitung des DDE über das Rechnernetzwerk durch die folgenden Schritte umfasst:
Ablegen (320) von Material von der ersten Anwendung in der Zwischenablage auf dem ersten Rechner;
Empfangen (330) einer Benachrichtigung an der Konferenzanwendung auf dem ersten Rechner, dass die erste Anwendung Material in der Zwischenablage abgelegt hat, und Abrufen einer Liste von verfügbaren Formaten für das abgelegte Material;
Übertragen (350) der Liste der verfügbaren Formate an den zweiten Rechner;
Ablegen (360) der Liste der verfügbaren Formate in der Zwischenablage auf dem zweiten Rechner;
als Antwort auf eine Anforderung von der zweiten Anwendung Starten eines DDE zwischen der Konferenzanwendung auf dem zweiten Rechner und der zweiten Anwendung und Übertragen der Anforderung von der Konferenzanwendung auf dem zweiten Rechner an die Konferenzanwendung auf dem ersten Rechner;
und als Antwort auf den Empfang der Anforderung an dem ersten Rechner Starten eines DDE zwischen der Konferenzanwendung auf dem ersten Rechner und der ersten Anwendung.

3. Verfahren nach Anspruch 2, das des Weiteren den Schritt 470 umfasst, in dem die Konferenzanwendung an dem zweiten Rechner die Daten, denen das Format zugewiesen ist, das dem DDE entspricht, ändert, indem sie den darin angegebenen Anwendungsnamen durch einen Namen ersetzt, der eine Kennung des ersten Rechners beinhaltet.

4. Verfahren nach Anspruch 2 oder 3, wobei die Liste der verfügbaren Formate unter Verwendung der verzögerten Übergabe in der Zwischenablage auf dem zweiten Rechner abgelegt wird.

5. Verfahren nach einem vorhergehenden Anspruch, das des Weiteren den Schritt der Erzeugung (530, 640) von eindeutigen Kennungen für den DDE-Dialog an dem ersten und dem zweiten Rechner und die Verwendung (720) des Paares eindeutiger Kennungen zur Kennzeichnung des DDE-Dialogs umfasst.

6. Verfahren nach Anspruch 5, das des Weiteren die Schritte (560) umfasst, in denen jede der Konferenzanwendungen auf dem ersten und dem zweiten Rechner Fensterkennungen verwaltet und das Paar eindeutiger Kennungen den Fensterkennungen zuordnet.

7. Verfahren nach einem vorhergehenden Anspruch, wobei der erste und der zweite Rechner ein erstes und ein zweites Betriebssystem ausführen.

8. Verfahren nach Anspruch 7, wobei alle Nachrichten zwischen Rechnern in einem Format gesendet werden, das mit dem ersten Betriebssystem kompatibel ist, und wobei das Verfahren des Weiteren an dem Rechner, der das zweite Betriebssystem ausführt, die Schritte der Umsetzung von Nachrichten in das Format zur Übertragung an den Rechner, der das erste Betriebssystem ausführt, und der Umsotzung von Nachrichten, die von dem Rechner empfangen werden, der das erste Betriebssystem ausführt, aus dem Format umfasst.

9. Arbeitsplatzrechner, der einen dynamischen Datenaustausch (DDE) über ein Rechnernetzwerk unterstützt, in dem Aktualisierungen, die von einer ersten Anwendung (APPN A) an dem Arbeitsplatzrechner durchgeführt werden, über das Netzwerk in eine zweite Anwendung (APPN B) an einem fernen Arbeitsplatzrechner kopiert werden, wobei der Arbeitsplatzrechner Folgendes umfasst:
Mittel zur Durchführung eines DDE zwischen der ersten Anwendung und einer ersten Konferenzanwendung (P2P-A) auf dem Arbeitsplatzrechner;
Mittel zur Übertragung von Aktualisierungen, die von der ersten Konferenzanwendung empfangen werden, an eine zweite Konferenzanwendung (P2P-B) auf dem fernen Rechner;
Mittel zum Empfang von Nachrichten von der zweiten Konferenzanwendung auf dem fernen Rechner; und
Mittel, die auf die empfangenen Nachrichten ansprechen, um DDE-Nachrichten von der ersten Konferenzanwendung an die erste Anwendung zu senden.

## Revendications

1. Un procédé de fourniture d'un échange de données dynamique (DDE) sur un réseau d'ordinateurs, dans lequel des mises à jour, faites par une première application (APPN A) sur un premier ordinateur (A) dans le réseau, sont copiées dans une deuxième application (APPN B) sur un deuxième ordinateur (B) dans le réseau, lesdits premier et deuxième ordinateurs faisant fonctionner chacun une application de conférence (P2P-A, P2P-B), le procédé comprenant les étapes consistant à :
exécuter l'échange DDE entre la première application et l'application de conférence fonctionnant sur le premier ordinateur;
transmettre des mises à jour reçues par l'application de conférence sur le premier ordinateur à partir de la première application à l'application de conférence fonctionnant sur le deuxième ordinateur; et
effectuer l'échange DDE entre l'application de conférence fonctionnant sur le deuxième ordinateur et la deuxième application, de manière que les mises à jour reçues par l'application de conférence sur le deuxième ordinateur soient fournies à la deuxième application.

2. Le procédé selon la revendication 1, comprenant en outre le lancement de l'échange DDE sur le réseau d'ordinateurs par les étapes ci-après, consistant à :
soumettre (320) le matériau issu de la première application au presse-papiers sur le premier ordinateur;
recevoir (330) la notification à l'application de conférence sur le premier ordinateur, du fait que la première application a soumis du matériau au presse-papiers, et obtenir une liste des formats disponibles pour ledit matériau soumis;
transmettre (350) la liste des formats disponibles au deuxième ordinateur;
soumettre (330) la liste des formats disponibles au presse-papiers sur le deuxième ordinateur;
en réponse à une requête issue de la deuxième application, commencer l'échange DDE entre l'application de conférence fonctionnant sur le deuxième ordinateur et la deuxième application, et transmettre ladite requête issue de l'application de conférence sur le deuxième ordinateur à l'application de conférence sur le premier ordinateur;
et, en réponse à la réception de ladite requête sur le premier ordinateur, commencer l'échange DDE entre l'application de conférence fonctionnant sur le premier ordinateur, et la première application.

3. Le procédé selon la revendication 2, comprenant en outre l'étape (470) d'application de conférence sur ledit deuxième ordinateur, changeant les données associées au format correspondant à l'échange DDE, en y remplaçant le nom d'application par un nom contenant un identificateur du premier ordinateur.

4. Le procédé selon la revendication 2 ou 3, dans lequel la liste des formats disponibles est soumise au presse-papiers sur le deuxième ordinateur, par utilisation d'une interprétation retardée.

5. Le procédé selon l'une quelconque des revendications précédentes, comprenant en outre l'étape de génération (530, 640) d'identificateurs uniques pour la conversation DDE à chacun desdits premier et deuxième ordinateurs, et utilisation (720) de la paire des identificateurs uniques pour identifier la conversation DDE.

6. Le procédé selon la revendication 5, comprenant en outre les étapes (560) d'applications de conférence sur les premier et deuxième ordinateurs, conservant chacun des maniements de fenêtre, et association auxdits maniements de fenêtre de ladite paire d'identificateurs uniques.

7. Le procédé selon l'une quelconque des revendications précédentes, dans lequel lesdits premier et deuxième ordinateurs font fonctionner des premier et deuxième système d'exploitation.

8. Le procédé selon la revendication 7, dans lequel tous les messages sont envoyés entre les ordinateurs sous un format compatible avec ledit premier système d'exploitation, et le procédé comprenant en outre les étapes, sur l'ordinateur faisant fonctionner ledit deuxième système d'exploitation, de conversion de messages pour une transmission à l'ordinateur faisant fonctionner le premier système d'exploitation sous ledit format, et conversion des messages reçus de l'ordinateur faisant fonctionner le premier système d'exploitation hors dudit format.

9. Un poste de travail d'ordinateur supportant un échange de données dynamique (DDE) sur un réseau d'ordinateurs, dans lequel des mises à jour, faites par une première application (APPN A) sur le poste de travail d'ordinateur, sont copiées en passant par le réseau, sur une deuxième application (APPN B) sur un poste de travail d'ordinateur distant, le poste de travail d'ordinateur comprenant :
des moyens pour effectuer un échange DDE entre la première application et une première application de conférence (P2P-A) sur le poste de travail d'ordinateur;
des moyens pour transmettre des mises à jour reçues par la première application de conférence à une deuxième application de conférence (P2P-B) sur l'ordinateur distant;
des moyens pour recevoir des messages de la deuxième application de conférence sur l'ordinateur distant; et
des moyens, réagissant auxdits messages reçus, pour envoyer des messages DDE de la première application de conférence à ladite première application.
